# EUROPEAN PATENT APPLICATION

(11) **EP 4 257 240 A1**
(43) Date of publication of application: **11.10.2023**
(21) Application number: 23165589.5
(22) Date of filing: 30.03.2023
(51) Int. Cl.: B02C 25/00, C14B 3/00, D05B 11/00, B26D 5/00, B32B 7/09, D01G 11/00, B26D 7/27

(54) **APPARATUS FOR RECYCLING FABRICS, LEATHER, PADDINGS, FIBERS AND THE LIKE**

(30) Priority: 06.04.2022 IT 202200006764
(71) Applicant: Resta S.r.l., 48018 Faenza (RA) (IT)
(72) Inventor: RESTA, Paolo, 48018 FAENZA RA (IT); RESTA, Roberto, 48018 FAENZA RA (IT)
(74) Representative: Modiano, Micaela Nadia

(57) **Abstract**

An apparatus (1) for recycling fabrics (A), leather (B), paddings (C), fibers (D) and the like, which comprises: at least one shredding device (2) configured to reduce to small fragments materials supplied at its inlet; at least one storage unit (3) for containing the fragments produced by the shredding device (2); at least one distribution unit (4) configured to pick up the fragments accumulated inside the storage unit (3) and distribute them on a laminar supporting element; at least one sewing machine (5) for sewing a covering sheet onto the laminar supporting element, with consequent segregation and blocking of the fragments, distributed in interposition between the supporting element and the sheet.

## Description

The present invention relates to an apparatus for recycling fabrics, leather (comprising, with this definition, natural leather and artificial leather), paddings (i.e., any material suitable for filling cushions, mattresses, upholstery, such as, for example, expanded polymers, fibers of any kind, elastomers, polymeric foams, latex foams and the like), fibers (such as, for example, textile fibers, natural fibers, synthetic fibers, mineral fibers, metal fibers, carbon fibers, glass fibers, Kevlar fibers, and the like) or other materials that may form part (even merely as accessories) of items of clothing (including shoes as well), items of furniture, upholstery and coverings, leather goods, sports equipment, and the like. It is specified that the materials on which the apparatus can operate according to the invention also include so-called "non-woven fabric" (abbreviated as NWF), latex, the material known as memory foam, and the like.

In general, a severe problem that increases in importance as time goes by is the recycling of production waste and of end-of-life products.

All of this material is often very complex to recycle according to traditional methods, since it is necessary beforehand to sort the raw materials that compose it (for example, in an item of clothing it is necessary to separate leather from fabrics and synthetic materials, furthermore sorting the paddings and accessories according to their composition).

This method of operation, however, is uneconomical (since sorting costs are very high) for many products. In particular, if there are heterogeneous elements to be sorted, it is not possible to provide automation for the separation and sorting of the corresponding components, since each element will have its own composition and its own shape and dimensions.

The aim of the present invention is to solve the problems described above by providing an apparatus for recycling fabrics, leather, paddings, fibers and the like that allows effective recycling of a heterogeneous group of materials.

Within this aim, an object of the invention is to provide an apparatus for recycling fabrics, leather, paddings, fibers and the like that does not require specific prior activities for sorting the heterogeneous group of materials on which it operates.

Another object of the invention is to provide an apparatus for recycling fabrics, leather, paddings, fibers and the like that has a substantially small footprint.

Another object of the invention is to provide an apparatus for recycling fabrics, leather, paddings, fibers and the like that entails a low energy consumption.

Another object of the invention is to provide an apparatus for recycling fabrics, leather, paddings, fibers and the like that allows to produce semi-finished products that are easy to manage logistically and to use industrially.

A further object of the present invention is to provide an apparatus for recycling fabrics, leather, paddings, fibers and the like that have a low cost and are relatively simple to provide in practice and of assured application.

This aim and these and other objects that will become better apparent hereinafter are achieved by an apparatus for recycling fabrics, leather, paddings, fibers and the like, characterized in that it comprises:
- at least one shredding device configured to reduce to small fragments materials supplied at its inlet;
- at least one storage unit for containing the fragments produced by said shredding device;
- at least one distribution unit configured to pick up the fragments accumulated inside said storage unit and distribute them on a laminar supporting element;
- at least one sewing machine for sewing a covering sheet onto said laminar supporting element, with consequent segregation and blocking of said fragments, distributed in interposition between said supporting element and said sheet.

Further characteristics and advantages of the invention will become better apparent from the description of a preferred but not exclusive embodiment of the apparatus for recycling fabrics, leather, paddings, fibers and the like, illustrated by way of non-limiting example in the accompanying drawings, wherein:

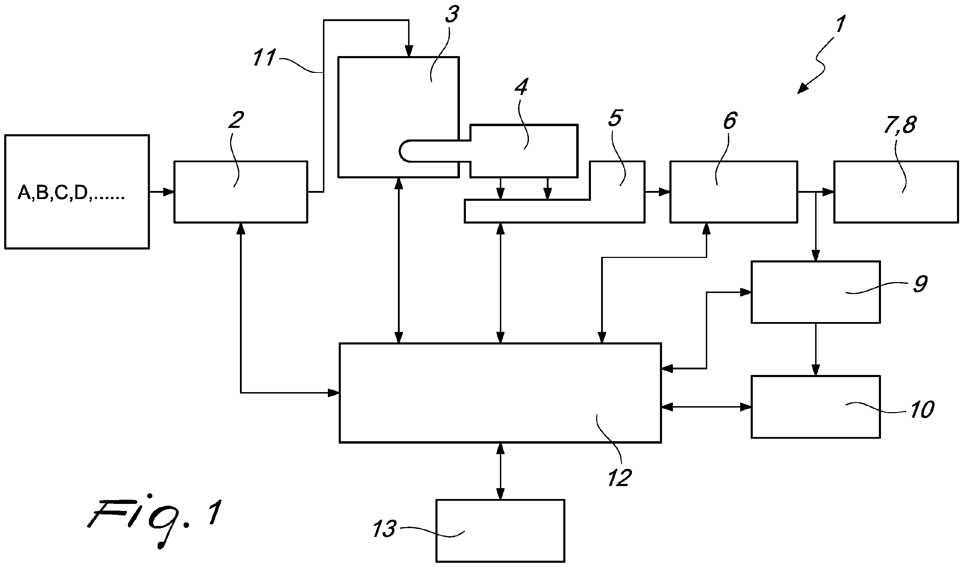

Figure 1 is a diagram of a possible embodiment of an apparatus for recycling fabrics, leather, paddings, fibers and the like according to the invention.

With particular reference to such figure, an apparatus for recycling fabrics A, leather B, paddings C, fibers D and the like is generally designated by the reference numeral 1.

The apparatus 1 according to the invention comprises at least one shredding device 2 configured to reduce into small fragments materials provided at its inlet.

The shredding device 2 may be chosen among devices of a known type, which operate by means of respective cutters (or hammers, or grinders, or equivalent tools) which may be actuated so as to rotate or actuated with a reciprocating motion. Depending on the operating speed of the tools and on the dwell time of the products inside the device 2, fragments of different sizes may be obtained.

It is specified that according to the invention it is preferable that the shredding device 2 is also configured to garnet materials of the type of the fabrics A, the paddings C, the fibers D and the like, so as to transform them into a fragment of small mass and suitable to occupy a large volume (precisely because of its garnetting).

Moreover, the apparatus 1 comprises a storage unit 3 for containing the fragments produced by the shredding device 2.

The storage unit 3 must be suitable for safely accommodating large quantities of fragments (which, as already described, can also be advantageously garnetted) and can conveniently be provided with means of mixing (blending) the material it contains.

By virtue of the presence of the mixing means, it is possible to ensure that the material present within the storage unit 3 is constantly distributed in an optimal manner, avoiding the accidental creation of regions with a greater presence of fragments of a single material (for example because only fabrics A or only leather B, etc., were delivered to the shredding device 2 for a certain period).

The mixing means may comprise vanes (for example rotating ones) or at least one screw feeder arranged and shaped so as to facilitate a recirculation of the fragments within the storage unit 3.

Moreover, the apparatus 1 comprises at least one distribution unit 4 configured to pick up the fragments accumulated inside the storage unit 3 and distribute them onto a laminar supporting element (not shown in the diagram of Figure 1).

Generally, the supporting element may be constituted by a band made of any material on which the distribution unit 4 deposits (with uniform distribution over all of the surface of said band or a predefined part thereof) the fragments picked up from the storage unit 3, providing a layer for covering the laminar support with said fragments.

The apparatus 1 according to the invention advantageously comprises a sewing machine 5 for sewing a covering sheet onto the laminar supporting element, consequently segregating and locking the distributed fragments in interposition between the supporting element and the sheet.

In particular, the sewing machine 5 may preferably be constituted by a needle felting machine, i.e., a machine adapted to provide a needle felting process on the assembly constituted by the laminar supporting element, the fragments and the covering sheet.

Needle felting is the process by which, by means of a vertical movement of the needles, compactness is imparted to a superimposed arrangement of multiple laminar layers.

The needle felting machine favorably has a needle supporting table that is as long as the transverse dimension of the laminar supporting element and is driven with a reciprocating motion downward from above at high speed. The needles quilt the assembly constituted by the laminar supporting element, the fragments and the covering sheet: this operation may provide for the use of sewing threads (in which case it will be termed true quilting) or not (thus forming a true needle felting, in which the needles drag with their motion some fibers of the laminar supporting element and/or of the fragments and/or of the covering sheet, thus generating mutual cohesion).

It is specified that at least one component chosen between the laminar supporting element and the covering sheet is of the continuous type: said component positively originates from a respective roll rotatably supported proximate to a station of the apparatus 1 chosen between the distribution unit 4 and the sewing machine 5.

The laminar supporting element and the covering sheet may therefore be of the type of bands or belts made of material suitable for undergoing stitching (or, more specifically, needle felting).

The apparatus 1 comprises, downstream of the sewing machine 5, an assembly 6 suitable for trimming the edges of the layered ribbon constituted by the covering sheet sewn (or needle felted) onto the laminar supporting element with the interposition of the distributed fragments, for a respective lateral containment closure.

The ribbon in output from the trimming assembly 6 already constitutes a semi-finished product that can be used in the industry to cover surfaces, or for the provision of soft substrates (which are then appropriately covered), or for the generation of a cushioning layer between two planar components pressed against each other, or for thermal/acoustic/vibrational insulation of specific components and/or for many other applications. For said reason, the ribbon in output from the trimming assembly 6 may be stored 7 (for later shipment) or transferred 8 to specific machines.

The apparatus 1 according to the invention may furthermore advantageously comprise, downstream of a station chosen between the sewing machine 5 and the trimming assembly 6, a quilting stage 9 for the ornamental decoration, by means of specifically arranged sewing lines, of said ribbon (constituted by the covering sheet sewn onto the laminar supporting element, with the interposition of the distributed fragments).

Moreover, the apparatus 1 according to the invention may advantageously comprise, downstream of a station chosen among the sewing machine 5, the trimming assembly 6 and the quilting stage 9, a stage for rolling 10 the ribbon up onto itself with consequent forming of respective rolls. Said rolls can also be transferred to an end user thereof.

The possibility to use the rolls prepared by the rolling-up stage 10 directly in the same production facility that generated the materials supplied as input to the apparatus 1 (fabrics A, leather B, paddings C, fibers D and the like) is very interesting from a circular economy point of view. In particular, it is specified that the materials supplied in input to the apparatus 1 may be constituted by waste, defective or incomplete semi-finished products, and/or other waste materials generated during specific industrial processes.

These materials (possibly after sanitization and/or disinfection and/or sanitizing and/or cleaning) may be fed into the apparatus 1 according to the invention, so that they can be quickly and effectively recycled on site. This solution makes it possible to minimize the processing residues of the entire production process (and thus also reduce the consumption of raw materials) by virtue of the recycling of the waste materials generated during the process by means of their respective delivery to the apparatus 1 according to the invention.

Moreover, the placement of the apparatus 1 in the same buildings (or proximate thereto) in which the main production process takes place also allows to minimize energy consumption (semi-finished products are immediately available on site and therefore easily usable in the main production process), also reducing the overall environmental impact of the entire industrial facility.

It is specified that, with particular reference to an embodiment of unquestionable interest in application and practice, the apparatus 1 according to the invention comprises a conveyor 11 for the fragments, which is interposed between the shredding device 2 and the storage unit 3.

The conveyor 11 may favorably be of a type chosen among a conveyor belt, a pneumatic pipeline (through which the fragments are entrained into the storage unit 3 by means of an air current generated by a respective compressed air and/or suction apparatus), a chute (if the shredding device 2 is at a higher elevation than the storage unit 3, thus utilizing gravity for the transfer of the fragments), a combination thereof, and the like. In particular, the use of screw feeders or screw conveyors, the use of actuated trolleys or "pick and place" elements of a known type is not excluded.

It is specified that the distribution unit 4 may usefully comprise a movement unit, connected with a first portion to the inside of said storage unit 3, so as to be able to pick up the fragments contained therein, and with a second delivery portion thereof to a head configured for the distribution of the fragments on the laminar supporting element (a distribution that may be uniform or not depending on the specific requirements). In this case also, the movement unit could be of the type of a conveyor belt (optionally equipped with side walls or drawers to facilitate the pickup of the fragments from the storage unit 3), although other embodiments are not ruled out.

The distribution unit 4 may then efficiently comprise a head configured for the distribution of the fragments on the laminar supporting element: this distribution takes place by means of at least one dispensing unit equipped with means for the release of the fragments onto specific areas of the laminar supporting element (the distribution can thus be provided according to specific criteria that can appropriately be set in advance).

In fact, it is not excluded that the distribution of the fragments, as well as uniform, may be provided by facilitating a greater accumulation of fragments in specific areas of the supporting element, depending on the predefined use of the finished ribbon that will exit from the apparatus 1.

Moreover, it is specified that the head configured for the distribution of the fragments on the laminar supporting element can usefully comprise a sensor for detecting the shape and size of said fragments: thus, the head is able to positively distribute the fragments according to specific predefined settings, in accordance with the shape and dimensions detected for each fragment. The operation performed by the sensor is, in fact, a calibration that allows better distribution of the fragments on the laminar supporting element, in accordance with the specific requirements.

It should also be pointed out that the recycling apparatus 1 according to the invention may moreover advantageously comprise a control and management computer 12, which controls the shredding device 2, the storage unit 3, the distribution unit 4, the sewing machine 5, and any assemblies interposed between them for the transfer of the fragments (such as the movement unit 11), of the laminar supporting element and of the covering sheet. The computer 12 is also suitable for the control and management of the quilting stage 9 and of the rolling-up stage 10.

The computer 12 is favorably connected to an interface for communication with at least one user, comprising at least one apparatus 13 chosen among a screen, a keyboard, a display, an optical indicator, an acoustic indicator, a loudspeaker, a microphone, and the like. In particular, the apparatus 13 may also be a work station (for example, a personal computer) placed proximate to the apparatus 1 or located remotely.

Advantageously, the present invention solves the problems described above, providing an apparatus 1 for recycling fabrics A, leather B, paddings C, fibers D, and the like that allows effective recycling of a heterogeneous group of materials.

Conveniently, the apparatus 1 according to the invention does not require specific prior activities for sorting and dividing the heterogeneous group of materials on which it operates.

Advantageously, the apparatus 1 according to the invention has substantially small footprint.

Favorably, the apparatus 1 according to the invention entails low energy consumption.

Positively the apparatus 1 according to the invention allows the production of semi-finished products that are easy to manage logistically and to use industrially.

Efficiently, the apparatus 1 according to the invention allows the production of semi-finished products that can be used directly in the industrial process that generated the materials supplied as input to the apparatus 1, ensuring the possibility of achieving complete recovery-recycling and reuse of production waste and of nonconforming products. This opportunity allows to optimize raw material consumption and also to contain overall energy consumption, thus ensuring a lower overall environmental impact of the industrial facility that integrates the apparatus 1 according to the invention.

Validly, the apparatus 1 according to the invention is relatively simple to provide in practice and of low cost: these features make the apparatus 1 according to the invention an innovation of assured application.

The invention thus conceived is susceptible of numerous modifications and variations, all of which are within the scope of the accompanying claims; all the details may furthermore be replaced with other technically equivalent elements.

In the embodiments shown, individual characteristics, given in relation to specific examples, may actually be interchanged with other different characteristics that exist in other embodiments.

In practice, the materials used, as well as the dimensions, may be any according to the requirements and the state of the art.

The disclosures in Italian Patent Application No. 102022000006764, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An apparatus for recycling fabrics (A), leather (B), paddings (C), fibers (D) and the like, **characterized in that** it comprises:
- at least one shredding device (2) configured to reduce to small fragments materials supplied at its inlet;
- at least one storage unit (3) for containing the fragments produced by said shredding device (2);
- at least one distribution unit (4) configured to pick up the fragments accumulated inside said storage unit (3) and distribute them on a laminar supporting element;
- at least one sewing machine (5) for sewing a covering sheet onto said laminar supporting element, with consequent segregation and blocking of said fragments, distributed in interposition between said supporting element and said sheet.

2. The recycling apparatus according to claim 1, **characterized in that** at least one component chosen between said laminar supporting element and said covering sheet is continuous, said component originating from a respective roll which is supported rotatably proximate to a station of said apparatus (1) chosen between said distribution unit (4) and said sewing machine (5).

3. The recycling apparatus according to one or more of the preceding claims, **characterized in that** it comprises, downstream of said sewing machine (5), an assembly (6) suitable to trim the edges of the layered ribbon constituted by said covering sheet sewn onto said laminar supporting element with the interposition of said distributed fragments, for a respective lateral containment closure.

4. The recycling apparatus according to one or more of the preceding claims, **characterized in that** it comprises, downstream of a station chosen between said sewing machine (5) and said trimming assembly (6), a quilting stage (9) for the ornamental decoration, by means of specifically arranged sewing lines, of said ribbon constituted by said covering sheet sewn onto said laminar supporting element with the interposition of said distributed fragments.

5. The recycling apparatus according to one or more of the preceding claims, **characterized in that** it comprises, downstream of a station chosen among said sewing machine (5), said trimming assembly (6) and said quilting stage (9), a stage (10) for rolling up said ribbon, with consequent forming of respective rolls.

6. The recycling apparatus according to one or more of the preceding claims, **characterized in that** it comprises a conveyor (11) for said fragments which is interposed between said shredding device (2) and said storage unit (3), said conveyor (11) being of a type chosen among a conveyor belt, a pneumatic pipe, a chute, combinations thereof, and the like.

7. The recycling apparatus according to one or more of the preceding claims, **characterized in that** said distribution unit (4) comprises a movement unit which is connected, with a first pickup portion thereof, to the fragments contained inside said storage unit (3) and, with a second delivery portion thereof, to a head configured to distribute the fragments on said laminar supporting element.

8. The recycling apparatus according to one or more of the preceding claims, **characterized in that** said distribution unit (4) comprises a head configured for the distribution of the fragments on said laminar supporting element by means of at least one dispensing unit provided with means for the release of said fragments onto specific areas of said laminar supporting element.

9. The recycling apparatus according to claim 8, **characterized in that** said head configured for the distribution of the fragments on said laminar supporting element comprises a sensor for detecting the shape and dimensions of said fragments, said head distributing said fragments according to specific presets, in accordance with the shape and dimensions detected for each fragment by said sensor.

10. The recycling apparatus according to one or more of the preceding claims, **characterized in that** it comprises a control and management computer (12), which controls at least said shredding device (2), said storage unit (3), said distribution unit (4), said sewing machine (5) and any assemblies interposed between them for the transfer of said fragments, of said laminar supporting element and of said covering sheet, said computer (12) being connected to an interface for communication with at least one user comprising at least one apparatus (13) chosen among a screen, a keyboard, a display, an optical indicator, an acoustic indicator, a loudspeaker, a microphone, and the like.
